# EUROPEAN PATENT SPECIFICATION

(11) **EP 3 668 680 B1**
(45) Date of publication and mention of the grant of the patent: **28.04.2021**
(21) Application number: 17758346.5
(22) Date of filing: 15.08.2017
(51) Int. Cl.: B23K 35/26, B23K 35/02, C22F 1/10, F01D 5/00, C22C 19/00

(54) **LASER METAL DEPOSITION WITH CORED FILLER WIRE**
LASERMETALLABSCHEIDUNG MIT KERNFÜLLDRAHT
DÉPÔT DE MÉTAL PAR LASER AVEC FIL DE REMPLISSAGE À NOYAU

(43) Date of publication of application: 24.06.2020
(73) Proprietor: Siemens Energy, Inc., Orlando, FL 32826-2399 (US)
(72) Inventor: BURBAUM, Bernd, 14612 Falkensee (DE); KAMEL, Ahmed, Orlando, Florida 32832 (US)
(74) Representative: Patentanwaltskanzlei WILHELM & BECK
(86) International application number: PCT/US2017/046942
(87) International publication number: WO 2019/035813

(56) References cited:
- WO-A1-2017/106131
- US-A1- 2004 079 742
- US-A1- 2011 226 390
- US-A1- 2013 316 183
- US-A1- 2016 090 848
- US-A1- 2016 144 441
- KAI ZHANG, WEIJUN LIU, XIAOFENG SHANG: "Research on the processing experiments of laser metal deposition shaping", ELSEVIER, OPTICS&LASER TECHNOLOGY, vol. 39, 6 December 2005 (2005-12-06), XP002781311, China

## Description

### TECHNICAL FIELD

The present disclosure relates generally to the field of materials technology, and more particularly to additive manufacturing and repair methods of laser metal deposition using cored filler wires.

### BACKGROUND

Weld repair of superalloys presents a variety of technical challenges because of the high strength (and corresponding low ductility) that these alloys are optimized to achieve. Heat sources such as lasers and arcs are being applied to build additively manufactured parts or repair damaged superalloy components. One type of process used for additive manufacturing or repair is a laser metal deposition (LMD) process. LMD processes utilize powdered materials that are deposited into a melt pool to form layers of an additive material, also known as build-up layer. Unfortunately, LMD processes using powdered materials are not efficient due to the amount of materials lost during the spraying process, e.g., deposits that fail to enter the melt pool for processing. Additionally, due to the unconfined nature of powdered materials, contaminants may often result end up being deposited along with the powdered materials during the LMD process. Therefore, a need remains for a more efficient LMD process, which at least reduces the loss of any materials during the LMD process, and which reduces or eliminates any contaminants associated with traditional powdered depositions. From document US 2004/079742 A1 a nickel based powder cored article and methods for its preparation and use are known. From document US 2011/226390 A1 superalloy repair welding using multiple alloy powders is known. From document US 2013/316183 A1 a localized repair of superalloy components is known. From document US 2016/090848 A1 a method for producing a three dimensional article and an article produced with such a method are known. From document US 2016/144441 A1 a low heat mediated cladding of superalloys using cored feed material is known. From document WO 2017/106131 A1 an apparatus and method for additively manufacturing a wire are known. From document Zhang et al. Optics & Laser Technology, 20070401 Elsevier, Vol:39, Nr:3, Page(s):549 - 557 research results on the processing experiments of laser metal deposition shaping are known.

### SUMMARY

It should be appreciated that the present inventor has recognized the above limitations, and now discloses a new cored filler wire for use during laser metal deposition processes. Although nickel-based superalloys with high gamma prime (*y'*) content cannot be , fabricated or forged as a wire, the present have developed embodiments of a cored filler wire where the outer shell or casing comprises a low y' content, which can be forged and defines an interior portion, and the interior portion may now be filled with a high y' content superalloy material, e.g., nickel-based superalloys, in powdered form.

The invention is disclosed in the appended claims.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
*Fig. 1A* illustrates a perspective view of a cross-section of an exemplary embodiment of a laser metal deposition (LMD) cored filler wire, in accordance with the disclosure provided herein;
*Fig. 1B* illustrates a second perspective view of the LMD cored filler wire of *Fig. 1A*, in accordance with the disclosure provided herein;
*Fig. 2* schematically illustrates an exemplary embodiment of an LMD process with an embodiment of the LMD cored filler wire of Fig. 1, in accordance with the disclosure provided herein; and
*Fig. 3* illustrates a block diagram of an LMD additive manufacturing and repair method with a cored filler wire, in accordance with the disclosure provided herein.

### DETAILED DESCRIPTION

The components and materials described hereinafter as making up the various embodiments are intended to be illustrative and not restrictive. Many suitable components and materials that would perform the same or a similar function as the materials described herein are intended to be embraced within the scope of embodiments of the present invention.

The present inventors have developed a novel additive manufacturing (AM) and/or repair method that involves, e.g., a laser metal deposition (LMD) process with a cored filler wire. Use of the disclosed wire technology with the LMD process reduces contaminations common with powdered particles and allows for structural repair of superalloy materials, as the novel cored filler wire, once processed, provides for an identical or near identical chemical composition as the base material or underlying component. Additionally, the inventors' novel cored filler wire provides for increased efficiency during the LMD process, as the cored filler wire now allows for a complete deposit of the additive materials to be fed into the melt pool, as the cored filler wire a confined space for the deposit. The novel cored filler wire further allows for repair technology for hard weldable metals, e.g., gas turbine blades, vanes or other hard weldable nickel based superalloys. It should further be appreciated that use of the cored filler wire also provides for a more complete 3D-printing application, as overhead LMD is now possible with a confined deposit, such as the novel cored filler wire. Rapid prototyping processes are also now possible via LMD with the inventors' cored filler wire.

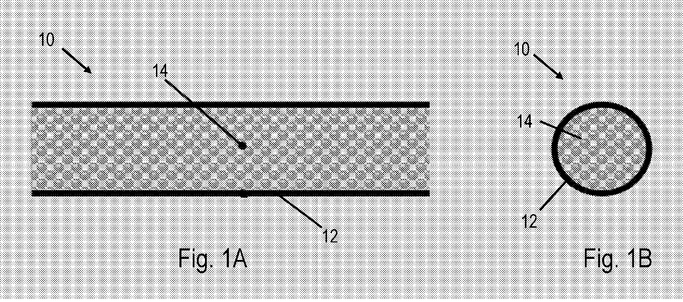

Referring now to the drawings wherein the showings are for purposes of illustrating embodiments of the subject matter herein only and not for limiting the same, *Figs. 1A* and *1B* illustrate perspective views of an exemplary embodiment of a laser metal deposition (LMD) cored filler wire (cored wire) **10.**

As shown in *Figs. 1A* and *1B*, the cored wire **10** may be comprised of at least an outer shell or casing **12** surrounding an interior portion of the cored wire **10**, i.e., an inner filler **14.** The cored wire **10** may be comprised of at least two different materials, with the outer shell **12** comprising at least a first material comprised of a base alloy material, which may include the same or similar materials forming the base material **5.** The outer shell **12** surrounds the inner filler **14** which may include at least a second material different from the first material, and which may include the same or similar materials forming the base material **5.**

For example, in an embodiment where the cored wire **10** is comprised of a nickel based superalloy with high gamma prime (*y'*) content and a braze alloy that may be used for high temperature brazing, the outer shell **12** may be made from, e.g., a low gamma prime y' nickel based alloy, which may be used for high temperature brazing as a powder or foil, e.g., DF-4B. The inner filler **14** may be made from, e.g., a powder comprised of a nickel based superalloy with high *y*' content, e.g., like Alloy247 and Rene80.

It should be appreciated that the *y'* content of the outer shell **12** materials is lower than the y' content of inner filler materials **14** due in part to the difficulties associated with forging, e.g., nickel alloy materials with high *y'* content. The lower *y*' content allows for forging of the outer shell **12** with a defined interior portion (core). The differences in *y'* content also results in the cored wire **10** being formed from at least two different materials, as the composition of the outer shell **12** with low *y'* content differs from the composition of the inner filler **14** with high *y'* content. Additionally or alternatively, the inner filler **14** may be comprised of a mixture or combination of a powdered braze alloy material with the powdered nickel based superalloy with high *y'* content. It should be appreciated that the braze alloy material comprised in the inner filler **14** may allow for a self-healing effect during any subsequent braze operation or post weld heat treatment.

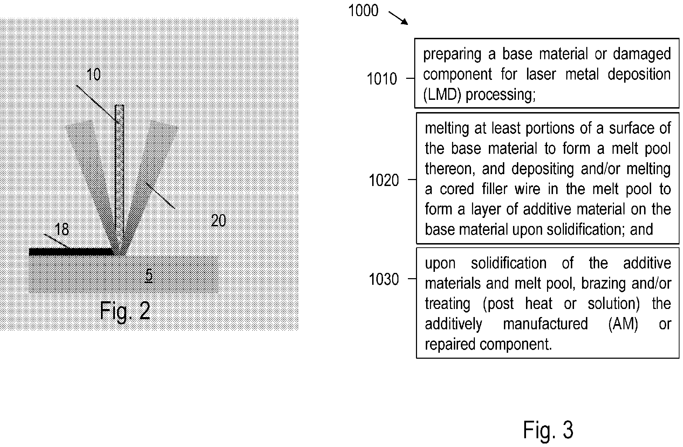

With continued reference to the figures, and now *Figs. 2* and *3*, an embodiment of an LMD process (method) **1000** using embodiments of the cored wire **10** is provided. It should be appreciated that any method steps disclosed herein are not required to be performed in any particular order, and are hereby provided for exemplary purposes.

For laser processing of the cord wire **10** to form a desired component, an LMD system may be provided for performing the disclosed method **1000.** The LMD system may include at least an energy source operably configured to emit laser energy, e.g., a laser beam **20** (continuous and/or pulsed), therefrom and towards, e.g., a surface of a base material **5**, component, or solidified layer of additive materials **18**, for melting portions of the base material **5** to form a melt pool thereon, and for melting the cored wire **10** therein to form layers of the additive (build-up) materials **18** upon solidification of the melted portions. Additionally or alternatively, the LMD system may include a feed tool (not shown) operably connected to the laser energy source or approximately thereto, for feeding and/or depositing the core wire **10** towards the base material **5** and/or into the melt pool for laser processing. The tool may be operatively connected to the laser energy source and/or a controller for controlling the deposition or feeding of the cored wire **10** into the melted portions of the base material. The controller may also be operably configured to control the intensity (heat temperature) of the laser energy and feed rate of the core wire **10.**

With continued reference to the figures, the method **1000** may include preparing a base material **5** or other component for laser processing via the LMD system (**1010**). Preparing the base material **5** or component for LMD processing may include, e.g., removing the component (damaged or otherwise) from an industrial machine, e.g., a turbo machine engine. The preparing steps may also include removing any damaged portions from the component and pre-heat and/or solution treating the component prior to begining the LMD process. The damaged portions may be removed by grinding, milling, or other means for removing damaged portions of a superalloy component known in the art. Upon removing any undesired portions from the component, the component may be placed or removably secured to, e.g., a platform (not shown) or other type of securing means in, e.g., a chamber or other defined work area, for build-up and/or repair via LMD process with embodiment of the cored wire **10.**

Upon securing the base material **5**, the method **1000** may include applying a laser energy **20**, via the LMD system, to form a build-up of additive materials **18** on the base material **5** from the cored wire **10** (**1020**). In this step, one or more laser beams **20** may be emitted from one or more laser sources of the LMD system, consecutively or simultaneously, towards the base material **5** to form a melt pool thereon and for depositing and melting the cored wire **10** therein. Upon forming the melt pool, the cored wire **10** may be deposited or fed into the melt pool, e.g., via a gripping device, power feed system, or other means in the art for depositing or feeding a forged wire, and melted via laser energy to form one or more layers of additive (build-up) materials **18** on the base material **5** upon solidification. It should be appreciated that, during LMD processing, the cored filler wire may be melted and metallurgically bonded to the base material with, e.g., the laser beam.

Additionally or alternatively, the melt pool may be protected by a shielding gas, e.g., argon, helium or mixtures thereof, which may be applied via the LMD system or a shielding system operably connected thereto for protecting the melt pool and/or deposit from contaminants.

In an embodiment where the inner filler **14** comprises a combination or mixture of, e.g., the base superalloy material and braze alloy material, the mixture of the base alloy and the braze alloy powder can be verified layer-wise, and the depositing and laser processing steps may be repeated until a shape and/or geometry of a desired component is achieved. It should be appreciated that a full metallurgical bonding and a self-healing of solidification cracks (hot cracks) during the LMD process may also be achieved during the subsequent or final brazing and/or a post weld heat treatment process due in part to the braze alloy mixture comprised in the inner filler **14.**

With continued reference to the figures, and upon solidification of the melted portions and achieving a desired part or component, the method **1000** may include high temperature brazing, e.g., via torch brazing, furnace brazing, etc., of the desired component (**1030**). It should be appreciated that during the subsequent high temperature brazing process **1030**, the braze alloy mixture in the inner filler **14** may cause a self-healing of the desired component. It should further be appreciated that additively manufacturing or repairing a component **5** via the inventors' novel LMD process with cored filler wire **10** allows for structural repair of components by using base alloy materials that are the same material as the base material of the component. That is, the LMD process allows for repair of the component with materials (additive materials) having, e.g., an identical or near identical composition as the underlying (base) substrate **5.**

The method **1000** may further include repeating any of the steps **1010-1030** until the desired component is achieved. Once the desired component has been achieved via the LMD process with cored wire **10**, the method may include steps for finishing the desired component, which may include machining or otherwise removing any undesired waste remaining from the LMD or brazing operation, and commencing any post weld treatments, e.g., post heat or solution treatment, prior to providing the component for operation in, e.g., an industrial machine. It should be appreciated that testing of the structural integrity of the component may also be desired and provided as an addition method **1000** step prior to using the desired component in its normal course of operation.

It should be appreciated that aspects of the exemplary LMD system disclose herein may be implemented by any appropriate processor system using any appropriate programming language or programming technique. The system can take the form of any appropriate circuitry, such as may involve a hardware embodiment, a software embodiment or an embodiment comprising both hardware and software elements. In one embodiment, the system may be implemented by way of software and hardware (e.g., processor, sensors, etc), which may include but is not limited to firmware, resident software, microcode, etc.

Furthermore, parts of the processor system can take the form of a computer program product accessible from a processor-usable or processor-readable medium providing program code for use by or in connection with a processor or any instruction execution system. Examples of processor-readable media may include non-transitory tangible processor-readable media, such as a semiconductor or solid-state memory, magnetic tape, a removable computer diskette, a random access memory (RAM), a read-only memory (ROM), a rigid magnetic disk and an optical disk. Current examples of optical disks include compact disk--read only memory (CD-ROM), compact disk--read/write (CD-R/W) and DVD.

## Claims

1. A laser metal deposition (LMD) cored filler wire (**10**) comprising:
an outer shell (**12**) defining a cored inner portion (**14**), wherein the outer shell is formed from a first material, and wherein the cored inner portion comprises at least a second material different from the first material, wherein the cored filler wire is a nickel based superalloy cored filler wire, and wherein the first material comprises a nickel based alloy and wherein the second material comprises a powdered nickel based superalloy, wherein the nickel based alloy of the first material comprises a low y' content and wherein the nickel based superalloy of the second material comprises a higher y' content than the first material.

2. The cored filler wire of claim 1, wherein the second material further comprises a powder braze metal alloy mixed with the powdered nickel based superalloy.

3. An additive manufacturing or repair method comprising:
preparing a base material substrate (**5**) (BMS) for laser metal deposition (LMD) processing;
melting portions of the BMS to form a melt pool thereon;
depositing or feeding a cored filler wire according to claim 1 into the melt pool and melting the cored filler wire to form a build-up layer of additive material (**18**) on the BMS upon solidification of the melted portions, wherein the cored filler wire is a nickel based superalloy cored filler wire, and wherein the first material comprises a nickel based alloy and wherein the second material comprises a powdered nickel based superalloy, wherein the nickel based alloy of the first material comprises a low y' content and wherein the nickel based superalloy of the second material comprises a higher y' content than the first material.

4. The method of claim 3, wherein the second material further comprises a powder braze metal alloy mixed with the powdered nickel based superalloy.

5. The method of claim 3 further comprising:
repeating the melting and depositing steps until a desired component is achieved.

6. The method of claims 3 or 5 further comprising:
brazing the desired component; and finishing the desired component via one or more of a grinding, milling, and post-weld treatment resulting, prior to placing the desired component in operation.

## Patentansprüche

1. Kernfülldraht (10) zur Lasermetallabscheidung (LMD), Folgendes umfassend:
eine äußere Ummantelung (12), die einen inneren Kernabschnitt (14) definiert, wobei die äußere Ummantelung aus einem ersten Material ausgebildet ist und wobei der innere Kernabschnitt mindestens ein zweites Material umfasst, das von dem ersten Material verschieden ist, wobei der Kernfülldraht eine Nickel-basierter Superlegierungskernfülldraht ist und wobei das erste Material eine Nickel-basierte Legierung umfasst und wobei das zweite Material eine pulverisierte Nickel-basierte Superlegierung umfasst, wobei die Nickel-basierte Legierung des ersten Materials einen geringen Gehalt y' umfasst und wobei die Nickel-basierte Superlegierung des zweiten Materials einen höheren Gehalt y' als das erste Material umfasst.

2. Kernfülldraht nach Anspruch 1, wobei das zweite Material weiterhin ein Hartlotmetalllegierungspulver umfasst, das mit der pulverisierten Nickel-basierten Superlegierung vermischt ist.

3. Generatives Fertigungs- oder Reparaturverfahren, Folgendes umfassend:
Zubereiten eines Basismaterialsubstrats (5) (BMS) zum Verarbeiten durch Lasermetallabscheidung (LMD);
Schmelzen von Abschnitten des BMS, um ein Schmelzbad darauf auszubilden;
Abscheiden oder Einspeisen eines Kernfülldrahts nach Anspruch 1 in das Schmelzbad und Schmelzen des Kernfülldrahts, um bei Verfestigung der geschmolzenen Abschnitte eine Auftragsschicht aus Zusatzmaterial (18) auf dem BMS auszubilden, wobei der Kernfülldraht ein Nickel-basierter Superlegierungskernfülldraht ist und wobei das erste Material eine Nickel-basierte Legierung umfasst und wobei das zweite Material eine pulverisierte Nickel-basierte Superlegierung umfasst, wobei die Nickel-basierte Legierung des ersten Materials einen geringen Gehalt y' umfasst und wobei die Nickel-basierte Superlegierung des zweiten Materials einen höheren Gehalt y' als das erste Material umfasst.

4. Verfahren nach Anspruch 3, wobei das zweite Material weiterhin ein Hartlotmetalllegierungspulver umfasst, das mit der pulverisierten Nickel-basierten Superlegierung vermischt ist.

5. Verfahren nach Anspruch 3, weiterhin Folgendes umfassend: Wiederholen der Schmelz- und Abscheidungsschritte, bis eine erwünschte Komponente erzielt wird.

6. Verfahren nach Anspruch 3 oder 5, weiterhin Folgendes umfassend:
Hartlöten der erwünschten Komponente; und Nachbearbeiten der erwünschten Komponente durch eine oder mehrere Behandlungen aus Schleifen, Walzen und Nachschweißbehandlung, bevor die erwünschte Komponente in Betrieb genommen wird.

## Revendications

1. Fil d'apport fourré (**10**) pour dépôt de métal par laser (LMD), comprenant :
une enveloppe externe (**12**) définissant une partie interne fourrée (**14**), l'enveloppe externe étant formée à partir d'un premier matériau, et la partie interne fourrée comprenant au moins un deuxième matériau différent du premier matériau, le fil d'apport fourré étant un fil d'apport fourré en superalliage à base de nickel, et le premier matériau comprenant un alliage à base de nickel et le deuxième matériau comprenant un superalliage à base de nickel en poudre, l'alliage à base de nickel du premier matériau comprenant une faible teneur y' et le superalliage à base de nickel du deuxième matériau comprenant une plus forte teneur y' que le premier matériau.

2. Fil d'apport fourré de la revendication 1, dans lequel le deuxième matériau comprend en outre un alliage métallique de brasage en poudre mélangé au superalliage à base de nickel en poudre.

3. Procédé de fabrication ou réparation additive comprenant :
la préparation d'un substrat en matériau de base (**5**) (BMS) pour un traitement par dépôt de métal par laser (LMD) ;
la fusion de parties du BMS pour former par-dessus un bain fondu ;
le dépôt ou l'introduction d'un fil d'apport fourré selon la revendication 1 dans le bain fondu et la fusion du fil d'apport fourré pour former une couche d'accumulation de matériau additif (**18**) sur le BMS lors de la solidification des parties fondues, le fil d'apport fourré étant un fil d'apport fourré en superalliage à base de nickel, et le premier matériau comprenant un alliage à base de nickel et le deuxième matériau comprenant un superalliage à base de nickel en poudre, l'alliage à base de nickel du premier matériau comprenant une faible teneur y' et le superalliage à base de nickel du deuxième matériau comprenant une plus forte teneur y' que le premier matériau.

4. Procédé de la revendication 3, dans lequel le deuxième matériau comprend en outre un alliage métallique de brasage en poudre mélangé au superalliage à base de nickel en poudre.

5. Procédé de la revendication 3 comprenant en outre :
la répétition des étapes de fusion et de dépôt jusqu'à ce qu'un composant souhaité soit obtenu.

6. Procédé de la revendication 3 ou 5 comprenant en outre :
le brasage du composant souhaité, et la finition du composant souhaité par le biais d'un ou plusieurs traitements parmi un meulage, un fraisage et un traitement après soudage, avant de mettre en fonctionnement le composant souhaité.
